# EUROPÄISCHE PATENTSCHRIFT

(11) **EP 2 242 783 B1**
(45) Veröffentlichungstag und Bekanntmachung des Hinweises auf die Patenterteilung: **07.12.2011**
(21) Anmeldenummer: 09709192.0
(22) Anmeldetag: 05.02.2009
(51) Int. Cl.: C08F 228/00

(54) **VERFAHREN ZUR HERSTELLUNG VON POLYMEREN DURCH IONENAUSTAUSCH**
METHOD FOR THE PRODUCTION OF POLYMERS BY MEANS OF ION EXCHANGE
PROCÉDÉ DE PRÉPARATION DE POLYMÈRES PAR ÉCHANGE D'IONS

(30) Priorität: 08.02.2008 DE 102008008179
(43) Veröffentlichungstag der Anmeldung: 27.10.2010
(73) Patentinhaber: Clariant Finance (BVI) Limited, Road Town, Tortola (VG)
(72) Erfinder: MORCHHAEUSER, Roman, 55122 (DE); LINDNER, Thomas, 68199 Mannheim (DE); DUECKER, Barbara, 55122 Mainz (DE); BACK, Ute, 63825 Blankenbach (DE); LOEFFLER, Matthias, 65510 ldstein (DE)
(74) Vertreter: Paczkowski, Marcus
(86) Internationale Anmeldenummer: PCT/EP2009/000767
(87) Internationale Veröffentlichungsnummer: WO 2009/098050

(56) Entgegenhaltungen:
- EP-A1- 1 033 378
- EP-A1- 1 069 142
- WO-A1-02/44268

## Beschreibung

Die vorliegende Erfindung betrifft ein Verfahren zur Herstellung von wasserlöslichen oder wasserquellbaren Alkali-, Erdalkali- oder Zn-Salzen von Polymeren auf Basis von Acrylamidoalkylsulfonsäuren oder deren Derivaten, beispielsweise von vernetzten Homopolymeren der Acrylamidoalkylsulfonsäuren oder von Copolymeren enthaltend neben Struktureinheiten hervorgegangen aus Acrylamidoalkylsulfonsäuren zusätzliche Struktureinheiten hervorgegangen aus cyclischen und/oder linearen N-Vinylcarbonsäureamiden oder hervorgegangen aus Estern der (Meth)acrylsäure mit Fettalkoholpolyglykolethern. Die Alkali-, Erdalkali- oder Zn-Salze dieser Polymere werden durch Ionenaustausch aus den leichter zugänglichen Ammoniumsalzen mit Basen der entsprechenden Metalle erhalten. Die Erfindung betrifft weiter die nach dem erfindungsgemäßen Verfahren erhältlichen Polymere, die Verwendung dieser Polymere als Verdicker oder Stabilisator sowie Selbstbräunungsmittel enthaltend ein oder mehrere dieser Polymere und Dihydroxyaceton.

Wasser- oder lösungsmittelhaltige Mehrkomponentensysteme wie Lösungen, Emulsionen oder Suspensionen werden häufig aus ökonomischen oder anwendungstechnischen Gründen oder aus Stabilitätsgründen auf höhere Viskositäten eingestellt bzw. verdickt.

So kann z. B. durch Erhöhung der Viskosität der externen oder internen Phase von Emulsionen oder Suspensionen erreicht werden, dass die Zeit bis zur Entmischung der Komponenten eines solchen Systems deutlich verlängert werden kann, was sich in einer Verlängerung der Lagerzeit bemerkbar macht. Durch Erhöhung der Viskosität wird auch bei vielen Produkten deren gleichmäßige Verteilbarkeit insbesondere auf unebenen Flächen verbessert. Dies gilt insbesondere für Hautpflegemittel und pharmazeutische Salben auf der Haut. Bei vielen technischen Produkten wie Tapetenablösern, Abbeizmitteln oder Flugzeugenteisem verhindert die erhöhte Viskosität ein vorzeitiges Abfließen von der zu behandelnden Fläche. Durch die gleichmäßigere Verteilung und verlängerte Einwirkdauer wird so die Wirksamkeit erhöht. Neben den erwähnten anwendungstechnischen Vorteilen bietet die hohe Viskosität solcher Präparate auch weitere Vorteile bei der Herstellung, Verpackung, Abfüllung und Lagerung sowie beim Transport.

Generell sind die rheologischen Eigenschaften bei der Herstellung und/oder Formulierung kosmetischer, pharmazeutischer oder technischer Präparate ein entscheidendes Kriterium für den Einsatz dieser Produkte in der Praxis. Die eingesetzten Verdicker sollen dabei bereits in möglichst geringen Einsatzmengen zu einer ausreichenden Verdickung führen.

Um die rheologischen Eigenschaften von wässrigen oder lösungsmittelhaltigen Systemen, Emulsionen oder Suspensionen einzustellen, wird in der Fachliteratur eine Vielzahl von unterschiedlichen Systemen angegeben. Bekannt sind beispielsweise Celluloseether und andere Cellulosederivate (z. B. Carboxymethylcellulose, Hydroxyethylcellulose), Gelatine, Stärke und Stärkederivate, Natriumalginate, Fettsäurepolyethylenglykolester, Agar-Agar, Traganth oder Dextrine. Als synthetische Polymere kommen verschiedene Materialien zum Einsatz, wie z. B. Polyvinylalkohole, Polyacrylamide, Polyacrylsäure und verschiedene Salze der Polyacrylsäure, Polyvinylpyrrolidon, Polyvinylmethylether, Polyethylenoxide, Copolymere aus Maleinsäureanhydrid und Vinylmethylether, sowie diverse Mischungen und Copolymerisate aus den oben angegebenen Verbindungen.

Die genannten Verbindungen zeigen jedoch bei der Anwendung vielfältige Nachteile. So sind z. B. die Cellulosederivate bzw. allgemein die auf natürlichen Rohstoffen basierenden Materialien und die daraus resultierenden Formulierungen sehr anfällig gegen Bakterien. Anwendungstechnisch fallen sie zumeist durch die Bildung unangenehmer, "fadenziehender" Gele auf. Fettsäurepolyethylenglykolester neigen in Gegenwart von Wasser zur Hydrolyse, die dabei entstehenden unlöslichen Fettsäuren verursachen unerwünschte Trübungen. Verdickungsmittel natürlichen Ursprungs (z. B. Agar-Agar oder Traganth) weisen je nach Herkunft eine stark schwankende Zusammensetzung auf.

In EP 1 116 733 wird ein hohes Verdickungsvermögen von Copolymeren beschrieben, die erhalten werden durch Polymerisation von Monomeren ausgewählt aus Acrylamidopropylmethylensulfonsäure, Salzen der Acrylamidopropylmethylensulfonsäure, Acrylamid, N-Vinylformamid, N-Vinylmethylacetamid und Natriummethallylsulfonat.

In EP 1 069 142 werden Copolymere offenbart, die erhalten werden durch radikalische Copolymerisation von einem oder mehreren Makromonomeren ausgewählt aus der Gruppe der Ester der (Meth)acrylsäure mit Alkylethoxylaten, die 5 bis 80 Ethylenoxid-Einheiten und (C₁₀-C₂₂)-Alkylreste umfassen, und einem oder mehreren olefinisch ungesättigten Comonomeren, ausgewählt aus der Gruppe Acrylamidopropylmethylen-sulfonsäure, Natrium- und Ammoniumsalze der Acrylamidopropylmethylensulfonsäure, Acrylamid, N-Vinylformamid, N-Vinylmethylacetamid und Natriummethallylsulfonat.

Vertreter der in EP 1 116 733 und in EP 1 069 142 genannten Copolymere sind als Ammoniumsalze unter den Handelsbezeichnungen Aristoflex^{®} AVC und Aristoflex^{®} HMB (Clariant) käuflich erwerbbar. Ferner ist auch das Ammoniumsalz der vernetzten Acrylamidopropylmethylensulfonsäure käuflich erwerbbar.

Die Ammoniumsalze dieser Polymere haben den Nachteil, dass sie in alkalischen Zusammensetzungen mit einem pH-Wert > 8,5 instabil sind und Ammoniak freisetzen.

Die zuvor genannten käuflich erwerbbaren Polymere werden, wie in EP 1 116 733 und in EP 1 069 142 beschrieben, in einer Fällungspolymerisation in tert.-Butanol mit einem Wassergehalt kleiner 10 Gew.-% hergestellt. Für dieses Verfahren kann kein Alkali- oder Erdalkalisalz von Acrylamidopropylmethylensulfonsäure als Monomer eingesetzt werden, da diese nur als ca. 50 Gew.%ige wässrige Lösung verfügbar sind. Das Wasser in der 50 Gew.%igen wässrigen Acrylamidopropylmethylensulfonsäure-Salz-Lösung würde jedoch im bestehenden Verfahren zu einer Gelbildung führen, da die resultierenden Polymere wässrige Systeme stark verdicken. Das 100 %ige Monomer-Na-Salz hingegen ist nicht stabil.

Somit sind Alkali-, Erdalkali- oder Zn-Salze der in den oben genannten Offenlegungs-schriften offenbarten Polymere nach diesem Verfahren nicht leicht zugänglich.

Aufgabe war es daher, ein Verfahren zur Verfügung zu stellen, nach dem Alkali-, Erdalkali- oder Zn-Salze von Polymeren auf Basis von Acrylamidoalkylsulfonsäuren oder deren Derivaten in großtechnischen Prozessen in einfacher Weise hergestellt werden können.

Es wurde gefunden, dass Alkali-, Erdalkali- oder Zn-Salze, vorzugsweise die Na⁺, K⁺, Mg⁺⁺, Ca⁺⁺ oder Zn⁺⁺-Salze, dieser Polymere in einfacher Weise zugänglich sind, wenn von den entsprechenden Ammoniumsalzen der Polymere ausgegangen wird, diese in einem organischen Lösungsmittel suspendiert werden und durch Zugabe von einer oder mehreren Basen enthaltend Na⁺, K⁺, Mg⁺⁺, Ca⁺⁺ oder Zn⁺⁺-Ionen ein Ionenaustausch erfolgt.

Gegenstand der Erfindung ist daher ein Verfahren zur Herstellung von Polymeren enthaltend
a) eine oder mehrere der wiederkehrenden Struktureinheiten der Formel (1) 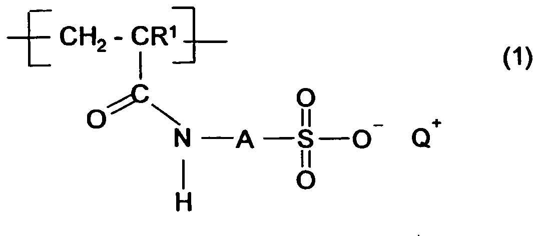 worin R¹ Wasserstoff, Methyl oder Ethyl bedeutet, A C₁-C₈-Alkylen bedeutet, Q⁺ H⁺, NH₄⁺, Na⁺, K⁺, ½ Mg⁺⁺, ½ Ca⁺⁺ oder ½ Zn⁺⁺ bedeutet, und wobei in 50 bis 100 mol-%, vorzugsweise in 80 bis 100 mol%, besonders bevorzugt in 90 bis 100 mol%, insbesondere bevorzugt in 95 bis 100 mol-% und außerordentlich bevorzugt in 98 bis 100 mol-% der Struktureinheiten der Formel (1) Q⁺ eine andere Bedeutung als H⁺ oder NH₄⁺ besitzt,
b) optional eine oder mehrere der wiederkehrenden Struktureinheiten der Formel (2) 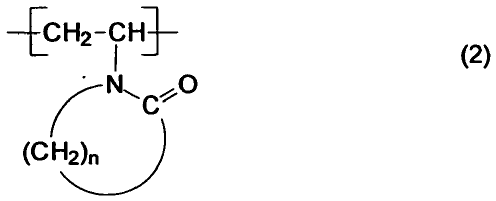 worin n eine ganze Zahl von 2 bis 9 bedeutet,
c) optional eine oder mehrere der wiederkehrenden Struktureinheiten der Formel (3) 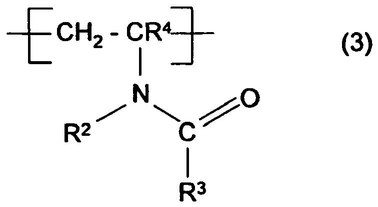 worin R², R³ und R⁴ gleich oder verschieden sein können und Wasserstoff, eine lineare oder verzweigte Alkylgruppe mit 1 bis 30, bevorzugt 1 bis 20 und besonders bevorzugt 1 bis 12 C-Atomen oder eine lineare oder verzweigte ein- oder mehrfach ungesättigte Alkenylgruppe mit 2 bis 30, bevorzugt 2 bis 20 und besonders bevorzugt 2 bis 12 C-Atomen, bedeuten,
d) optional eine oder mehrere der wiederkehrenden Struktureinheiten abgeleitet von Monomeren der Formel (4) 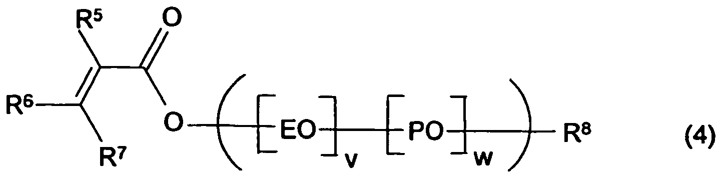 worin R⁵ für H oder -CH₃ steht, R⁶ und R⁷ unabhängig voneinander H oder -CH₃, bevorzugt H, bedeuten, R⁸ für eine lineare oder verzweigte Alkylgruppe mit 1 bis 30, vorzugsweise 8 bis 22 und besonders bevorzugt 12 bis 18 Kohlenstoffatomen, für eine lineare oder verzweigte, ein- oder mehrfach ungesättigte Alkenylgruppe mit 2 bis 30, vorzugsweise 8 bis 22 und besonders bevorzugt 12 bis 18 Kohlenstoffatomen oder für einen cycloaliphatischen, arylaliphatischen oder aromatischen Kohlenwasserstoffrest mit 6 bis 30 Kohlenstoffatomen steht, EO für eine Ethylenoxideinheit steht, PO für eine Propylenoxideinheit steht, v und w unabhängig voneinander für Zahlen von 0 bis 500 stehen, die Summe aus v und w im Mittel ≥ 1 ist und die Verteilung der EO- und PO-Einheiten über die Gruppe -(-[EO]ᵥ₋[POW]_{w}-)- statistisch, blockartig, alternierend oder gradientenartig sein kann, und
e) optional eine oder mehrere vernetzende Struktureinheiten, die aus Monomeren mit mindestens zwei olefinischen Doppelbindungen hervorgegangen sind,
mit der Maßgabe, dass die Polymere eine oder mehrere Struktureinheiten ausgewählt aus b) bis e) enthalten,
dadurch gekennzeichnet, dass die entsprechenden Salze dieser Polymere, worin jedoch die Kationen Q⁺ in den Struktureinheiten der Formel (1) NH₄⁺ und gegebenenfalls zusätzlich H⁺ bedeuten, als Edukt in einem organischen Lösungsmittel suspendiert werden und durch Zugabe von einer oder mehreren Basen enthaltend Na⁺, K⁺, Mg⁺⁺, Ca⁺⁺ oder Zn⁺⁺-Ionen ein Ionenaustausch erfolgt.

Die Verteilung der Struktureinheiten innerhalb der nach dem erfindungsgemäßen Verfahren hergestellten bzw. erhältlichen Polymere kann statistisch, blockartig, alternierend oder gradientenartig sein.

Die nach dem erfindungsgemäßen Verfahren hergestellten bzw. erhältlichen Polymere besitzen bevorzugt ein Molekulargewicht von 10³ bis 10⁹ g/mol, besonders bevorzugt von 10⁴ bis 10⁷ g/mol, insbesondere bevorzugt von 5 · 10⁴ bis 5 · 10⁶ g/mol.

Die nach dem erfindungsgemäßen Verfahren hergestellten bzw. erhältlichen Polymere sind wasserlöslich oder wasserquellbar.

Im erfindungsgemäßen Verfahren werden Polymere enthaltend eine oder mehrere Struktureinheiten der Formel (1) mit NH₄⁺ und gegebenenfalls H⁺ als Gegenion und eine oder mehrere Struktureinheiten ausgewählt aus b) bis e) als Edukte eingesetzt, wobei der Neutralisationsgrad der Säure, von der sich die Struktureinheit der Formel (1) ableitet, vorzugsweise 50 bis 100 %, besonders bevorzugt 80 bis 100 %, insbesondere bevorzugt 90 bis 100%, außerordentlich bevorzugt 95 bis 100 % und weiter bevorzugt 98 bis 100 % beträgt.

Dies bedeutet insbesondere, dass das Edukt vorzugsweise 50 bis 100 mol-% der Struktureinheiten der Formel (1) mit NH₄⁺ als Gegenion und 0 bis 50 mol% der Struktureinheiten der Formel (1) mit H⁺ als Gegenion enthält, besonders bevorzugt 80 bis 100 mol-% der Struktureinheiten der Formel (1) mit NH₄⁺ als Gegenion und 0 bis 20 mol-% der Struktureinheiten der Formel (1) mit H⁺ als Gegenion enthält, insbesondere bevorzugt 90 bis 100 mol-% der Struktureinheiten der Formel (1) mit NH₄⁺ als Gegenion und 0 bis 10 mol-% der Struktureinheiten der Formel (1) mit H⁺ als Gegenion enthält, außerordentlich bevorzugt 95 bis 100 mol% der Struktureinheiten der Formel (1) mit NH₄⁺ als Gegenion und 0 bis 5 mol-% der Struktureinheiten der Formel (1) mit H⁺ als Gegenion enthält und weiter bevorzugt 98 bis 100 mol-% der Struktureinheiten der Formel (1) mit NH₄⁺ als Gegenion und 0 bis 2 mol-% der Struktureinheiten der Formel (1) mit H⁺ als Gegenion enthält.

Eine äußerst bevorzugte Ausführungsform der Erfindung ist ein Verfahren, dadurch gekennzeichnet, dass das Edukt 100 mol-% der Struktureinheiten der Formel (1) mit NH₄⁺ als Gegenion enthält.

Das in dem erfindungsgemäßen Verfahren verwendete organische Lösungsmittel ist vorzugsweise ein protisches Lösungsmittel, besonders bevorzugt tert.-Butanol.

Die in dem erfindungsgemäßen Verfahren verwendeten Basen sind vorzugsweise ausgewählt aus Hydroxiden und Alkoxylaten, besonders bevorzugt aus Hydroxiden und Alkoxylaten von Na⁺, K⁺ und/oder Zn⁺⁺. Insbesondere bevorzugt ist die Base NaOH.

Das erfindungsgemäße Verfahren wird vorzugsweise bei einer Temperatur von 25 bis 100 °C, besonders bevorzugt von 40 bis 100 °C und insbesondere bevorzugt von 60 bis 100 °C durchgeführt. Sofern das im erfindungsgemäßen Verfahren verwendete Lösungsmittel einen Siedepunkt von weniger als 100 °C besitzt, wie z. B. tert.-Butanol, wird das Verfahren vorzugsweise bei einer Temperatur von 25 °C bis zum Siedepunkt des verwendeten Lösungsmittels, besonders bevorzugt von 40 °C bis zum Siedepunkt des verwendeten Lösungsmittels, insbesondere bevorzugt von 60 °C bis zum Siedepunkt des verwendeten Lösungsmittels und außerordentlich bevorzugt beim Siedepunkt des verwendeten Lösungsmittels durchgeführt.

Das erfindungsgemäße Verfahren wird vorzugsweise bei Atmosphärendruck durchgeführt.

Das erfindungsgemäße Verfahren wird vorzugsweise unter Durchleitung von Inertgas, vorzugsweise Stickstoff, besonders bevorzugt bei einer Durchflussrate von 40 bis 80 l/h Inertgas, durchgeführt.

Das erfindungsgemäße Verfahren wird vorzugsweise bei einem pH-Wert von 7,5 bis 8,5 durchgeführt.

Das erfindungsgemäße Verfahren wird vorzugsweise derart ausgeführt, dass das Edukt in einem organischen protischen Lösungsmittel, vorzugsweise in tert.-Butanol, vorzugsweise unter kräftigem Rühren, suspendiert wird, vorzugsweise bei 40 bis 60 °C suspendiert wird, vorzugsweise Inertgas, besonders bevorzugt Stickstoff, durchgeleitet und eine oder mehrere Basen enthaltend Na⁺, K⁺, Mg⁺⁺, Ca⁺⁺ oder Zn⁺⁺-Ionen, vorzugsweise NaOH, besonders bevorzugt konzentrierte NaOH (50 Gew.-% in Wasser), zudosiert werden. Mit dem Ansteigen des pH-Wertes auf 7,5 bis 8,5 entsteht Ammoniak, der vorzugsweise mit dem Inertgas-Strom fortlaufend entfernt wird, so lange bis kein Ammoniakaustritt mehr messbar ist und der Ionenaustausch von Ammoniumionen gegen Na⁺, K⁺, Mg⁺⁺, Ca⁺⁺ oder Zn⁺⁺-Ionen quantitativ erfolgt ist.

Das erfindungsgemäße Verfahren wird besonders bevorzugt derart ausgeführt, dass das Edukt in einem organischen protischen Lösungsmittel, vorzugsweise in tert.-Butanol, vorzugsweise unter Rühren, suspendiert wird, eine oder mehrere Basen ausgewählt aus Hydroxiden und Alkoxylaten von Na⁺, K⁺, Mg⁺⁺, Ca⁺⁺ oder Zn⁺⁺, bevorzugt eine oder mehrere Basen ausgewählt aus Hydroxiden und Alkoxylaten von Na⁺, K⁺ oder Zn⁺⁺, besonders bevorzugt NaOH, zudosiert werden, und das Verfahren bei einer Temperatur von 25 bis 100 °C und bei Verwendung eines Lösungsmittels, das einen Siedepunkt von weniger als 100 °C besitzt, bei einer Temperatur von 25 °C bis zum Siedepunkt des verwendeten Lösungsmittels, vorzugsweise bei einer Temperatur von 40 bis 100 °C und bei Verwendung eines Lösungsmittels, das einen Siedepunkt von weniger als 100 °C besitzt, bei einer Temperatur von 40 °C bis zum Siedepunkt des verwendeten Lösungsmittels, und vorzugsweise unter Durchleitung von Inertgas, besonders bevorzugt Stickstoff, insbesondere bevorzugt bei einer Durchflussrate von 40 bis 80 l/h Inertgas, bei einem pH-Wert von 7,5 bis 8,5 durchgeführt wird.

Das erfindungsgemäße Verfahren wird insbesondere bevorzugt derart ausgeführt, dass
a) die entsprechenden überwiegend festen Ammoniumsalze der Polymere, d. h. das Edukt, in einem protischen Lösungsmittel unter Rühren suspendiert und vorzugsweise auf 40 bis 60 °C aufgeheizt werden,
b) vorzugsweise über ein Einleitungsrohr Inertgas, besonders bevorzugt Stickstoff, insbesondere bevorzugt mit einer Durchflussrate von 60 l/h, durchgeleitet wird,
c) Basen enthaltend Na⁺, K⁺, Mg⁺⁺, Ca⁺⁺ oder Zn⁺⁺-Ionen in den Reaktor zudosiert werden, vorzugsweise mit einer Tropfgeschwindigkeit von 3 bis 9 g/Minute
d) die Innentemperatur im Reaktor bis zur Siedehitze gesteigert wird
e) der pH-Wert über die Dossierrate auf 7,5 bis 8,5 gehalten wird
f) vorzugsweise entstehender Ammoniak mit Säure, besonders bevorzugt mit Schwefelsäure, insbesondere bevorzugt mit 25 Gew.%iger Schwefelsäure in Wasser, abgefangen wird
g) vorzugsweise nach Beendigung der Zudosierung unter Rückfluss nachgerührt wird, besonders bevorzugt 1,5 Stunden unter Rückfluss nachgerührt wird
h) die Suspension abgekühlt wird und
i) der Ansatz getrocknet wird, vorzugsweise im Vakuumschrank bei 30 bis 50 °C und 10 bis 100, vorzugsweise 80 bis 100 mbar.

Das erfindungsgemäße Verfahren wird außerordentlich bevorzugt derart ausgeführt, dass
j) die entsprechenden überwiegend festen Ammoniumsalze der Polymere, d.h. das Edukt, in einem protischen Lösungsmittel, vorzugsweise in tert.-Butanol, unter Rühren suspendiert und vorzugsweise auf 40 bis 60 °C aufgeheizt werden,
k) über ein Einleitungsrohr Inertgas, vorzugsweise Stickstoff, besonders bevorzugt mit einer Durchflussrate von 60 l/h, durchgeleitet wird,
l) Basen enthaltend Na⁺, K⁺, Mg⁺⁺, Ca⁺⁺ oder Zn⁺⁺-Ionen in den Reaktor zudosiert werden, vorzugsweise mit einer Tropfgeschwindigkeit von 3 bis 9 g/Minute
m) die Innentemperatur im Reaktor bis zur Siedehitze gesteigert wird
n) der pH-Wert über die Dossierrate auf 7,5 bis 8,5 gehalten wird
o) vorzugsweise entstehender Ammoniak mit Säure, besonders bevorzugt mit Schwefelsäure, insbesondere bevorzugt mit 25 Gew.-%iger Schwefelsäure in Wasser, abgefangen wird
p) vorzugsweise nach Beendigung der Zudosierung unter Rückfluss nachgerührt wird, besonders bevorzugt 1,5 Stunden unter Rückfluss nachgerührt wird
q) die Suspension abgekühlt wird und
r) der Ansatz getrocknet wird, vorzugsweise im Vakuumschrank bei 30 bis 50 °C und 10 bis 100, vorzugsweise 80 bis 100 mbar.

Im erfindungsgemäßen Verfahren besonders bevorzugt zum Einsatz kommen Basen der Alkali- und Erdalkalimetalle ausgewählt aus NaOH, KOH, Natrium- und Kaliumalkoxylaten, bevorzugt Natrium- oder Kalium-tert.-Butanolat, sowie Zinkverbindungen ausgewählt aus Zn(OH)₂ und Zinkalkoxylaten.

Eine insbesondere bevorzugte Ausführungsform der Erfindung ist ein Verfahren zur Herstellung von Natriumsalzen der Polymere.

In dem Fall, dass Basen mit einwertigen Kationen für das erfindungsgemäße Verfahren verwendet werden, ist das Molverhältnis von auszutauschenden Kationen Q⁺ des Polymers bzw. Edukts zu einwertigen Kationen der für den Ionenaustausch verwendeten Base vorzugsweise 1,0 : 0,5 bis 2,0, besonders bevorzugt 1,0 : 0,80 bis 1,0, insbesondere bevorzugt 1,0 : 0,90 bis 1,0, außerordentlich bevorzugt 1,0 : 0,95 bis 1,0 und weiter bevorzugt 1,0 : 0,98 bis 1,0. In dem Fall, dass Basen mit zweiwertigen Kationen für das erfindungsgemäße Verfahren verwendet werden, ist das entsprechende Molverhältnis vorzugsweise 1,0 : 0,25 bis 1,0, besonders bevorzugt 1,0 : 0,4 bis 0,5, insbesondere bevorzugt 1,0 : 0,45 bis 0,5, außerordentlich bevorzugt 1,0 : 0,475 bis 0,5 und weiter bevorzugt 1,0 : 0,49 bis 0,5.

Die Menge an Polymer-Edukt im Lösungsmittel beim erfindungsgemäßen Verfahren ist vorzugsweise von 5,0 bis 80,0 Gew.-%, besonders bevorzugt von 7,0 bis 50,0 Gew.-% und insbesondere bevorzugt von 10,0 bis 30,0 Gew.-%.

Weiterhin bevorzugt sind erfindungsgemäße Verfahren, wobei sich die Struktureinheiten der Formel (1) von der 2-Acrylamido-2-methyl-propan-sulfonsäure ableiten.

Weiterhin bevorzugt sind erfindungsgemäße Verfahren, wobei sich die Struktureinheiten der Formel (2) von N-Vinylpyrrolidon ableiten.

Weiterhin bevorzugt sind erfindungsgemäße Verfahren, wobei R², R³ und R⁴ in den Struktureinheiten der Formel (3) unabhängig voneinander Wasserstoff oder Methyl bedeuten.

Weiterhin bevorzugt sind erfindungsgemäße Verfahren, wobei R⁸ in den Struktureinheiten abgeleitet von Monomeren der Formel (4) für eine lineare oder verzweigte Alkylgruppe mit 8 bis 22 und bevorzugt 12 bis 18 Kohlenstoffatomen, oder für eine lineare oder verzweigte, ein- oder mehrfach ungesättigte Alkenylgruppe mit 8 bis 22 und bevorzugt 12 bis 18 Kohlenstoffatomen, steht. Hierunter sind wiederum diejenigen erfindungsgemäßen Verfahren bevorzugt, wobei R⁸ in den Struktureinheiten abgeleitet von den Monomeren der Formel (4) eine Alkylgruppe ist.

In einer weiteren bevorzugten Ausführungsform des erfindungsgemäßen Verfahrens ist die Summe aus v und w in den Struktureinheiten abgeleitet von den Monomeren der Formel (4) im Mittel von 1 bis 40, vorzugsweise von 3 bis 40, besonders bevorzugt von 5 bis 30, insbesondere bevorzugt von 8 bis 25 und außerordentlich bevorzugt von 10 bis 25. In diesen Struktureinheiten abgeleitet von den Monomeren der Formel (4) stehen v und w unabhängig voneinander vorzugsweise für Zahlen von 0 bis 40, besonders bevorzugt von 0 bis 30 und insbesondere bevorzugt von 0 bis 25. Hierunter sind wiederum diejenigen erfindungsgemäßen Verfahren bevorzugt, wobei w in den Struktureinheiten abgeleitet von den Monomeren der Formel (4) 0 ist.

In einer besonders bevorzugten Ausführungsform des erfindungsgemäßen Verfahrens sind die Struktureinheiten abgeleitet von den Monomeren der Formel (4) abgeleitet von
(C₁₀-C₁₈)-Fettalkoholpolyglykolethem mit 8 EO-Einheiten (Genapol^{®} C-080)
C₁₁-Oxoalkoholpolyglykolethern mit 8 EO-Einheiten (Genapol^{®} UD-080)
(C₁₂-C₁₄)-Fettalkoholpolyglykolethern mit 7 EO-Einheiten (Genapol^{®} LA-070)
(C₁₂-C₁₄)-Fettalkoholpolyglykolethern mit 11 EO-Einheiten (Genapol^{®} LA-110)
(C₁₆-C₁₈)-Fettalkoholpolyglykolethern mit 8 EO-Einheiten (Genapol^{®} T-080)
(C₁₆-C₁₈)-Fettalkoholpolyglykolethern mit 11 EO-Einheiten (Genapol^{®} T-110)
(C₁₆-C₁₈)-Fettalkoholpolyglykolethern mit 15 EO-Einheiten (Genapol^{®} T-150)
(C₁₆-C₁₈)-Fettalkoholpolyglykolethern mit 20 EO-Einheiten (Genapol^{®} T-200)
(C₁₆-C₁₈)-Fettalkoholpolyglykolethern mit 25 EO-Einheiten (Genapol^{®} T-250)
(C₁₈-C₂₂)-Fettalkoholpolyglykolethern mit 25 EO-Einheiten und/oder
iso-(C₁₆-C₁₈)-Fettalkoholpolyglykolethern mit 25 EO-Einheiten,
wobei diese angegebenen Strukturen bevorzugte Strukturen für die Teilstruktur -O-(-[EO]ᵥ-[PO]_{w}-)-R⁸ der Formel (4) darstellen und die diesen Teilstrukturen zugrunde liegenden Alkohole HO-(-[EO]ᵥ-[PO]_{w}-)-R⁸ besonders bevorzugt mit Acrylsäure oder Methacrylsäure verestert sind. Bei den Genapol^{®}-Typen handelt es sich um Produkte der Firma Clariant.

In einer weiteren bevorzugten Ausführungsform des erfindungsgemäßen Verfahrens ist v in den Struktureinheiten abgeleitet von den Monomeren der Formel (4) eine Zahl von 1 bis 30, bevorzugt 3 bis 25, und w eine Zahl von 1 bis 30, bevorzugt 3 bis 15.

Die eine oder die mehreren vernetzenden Struktureinheiten der Komponente e) unterscheiden sich von den Struktureinheiten der Komponenten a) bis d).

Weiterhin bevorzugt sind erfindungsgemäße Verfahren, wobei sich die vernetzenden Struktureinheiten der Komponente e) ableiten von Acryl- oder Methacrylsäureallylester, Maleinsäurediallylester, Dipropylenglykoldiallylether, Polyglykoldiallylether, Triethylenglykoldivinylether, Hydrochinondiallylether, Tetraallyloxyethan oder anderen Allyl- oder Vinylethern multifunktioneller Alkohole, Tetraethylenglykoldiacrylat, Polyethylenglykoldimethacrylat mit im Mittel 9 Ethylenoxid-Einheiten in der Polyethylenglykol-Einheit, Triallylamin, Triallylcyanurat, Trimethylolpropandiallylether, Methylenbisacrylamid, Methylenbismethacrylamid, Trimethylolpropantriacrylat (TMPTA), Trimethylolpropantrimethacrylat (TMPTMA) oder Divinylbenzol.

Besonders bevorzugt leiten sich die vernetzenden Struktureinheiten der Komponente e) ab von Monomeren der Formel (5), 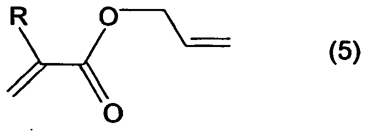 worin R Wasserstoff, Methyl oder Ethyl bedeutet, von Trimethylolpropantriacrylat, von Trimethylolpropantrimethacrylat oder von Polyethylenglykoldimethacrylat mit im Mittel 9 Ethylenoxid-Einheiten in der Polyethylenglykol-Einheit. Insbesondere bevorzugt leiten sich die vernetzenden Struktureinheiten der Komponente e) ab von Trimethylolpropantriacrylat, von Trimethylolpropantrimethacrylat oder von Polyethylenglykoldimethacrylat mit im Mittel 9 Ethylenoxid-Einheiten in der Polyethylenglykol-Einheit.

Vorzugsweise bestehen die nach dem erfindungsgemäßen Verfahren hergestellten bzw. erhältlichen Polymere aus Struktureinheiten ausgewählt aus den Struktureinheiten der Komponenten a) bis e).

In einer bevorzugten Ausführungsform der Erfindung enthalten die nach dem erfindungsgemäßen Verfahren hergestellten bzw. erhältlichen Polymere keine vernetzenden Struktureinheiten der Komponente e).

In einer weiteren bevorzugten Ausführungsform der Erfindung enthalten die nach dem erfindungsgemäßen Verfahren hergestellten bzw. erhältlichen Polymere bis zu 8, vorzugsweise von 0,01 bis 8, besonders bevorzugt von 0,01 bis 5 und insbesondere bevorzugt von 0,02 bis 3 Gew.-% an einer oder mehreren vernetzenden Struktureinheiten der Komponente e).

Eine besonders bevorzugte Ausführungsform der Erfindung ist ein Verfahren zur Herstellung von Polymeren enthaltend, vorzugsweise bestehend aus
a) 49,99 bis 98,99 Gew.-% einer oder mehrerer der wiederkehrenden Struktureinheiten der Formel (1),
b) 1 bis 50 Gew.-% einer oder mehrerer der wiederkehrenden Struktureinheiten der Formel (2), und
e) 0 bis 8, vorzugsweise 0,01 bis 5 Gew.-%, einer oder mehrerer vernetzender Struktureinheiten, die aus Monomeren mit mindestens zwei olefinischen Doppelbindungen hervorgegangen sind.

Hierunter bevorzugt sind wiederum erfindungsgemäße Verfahren zur Herstellung von Polymeren enthaltend, vorzugsweise bestehend aus
a) 69,5 bis 97,5, vorzugsweise 84,5 bis 96,5 Gew.-%, einer oder mehrerer der wiederkehrenden Struktureinheiten der Formel (1), vorzugsweise abgeleitet von der 2-Acrylamido-2-methyl-propan-sulfonsäure,
b) 2 bis 30, vorzugsweise 3 bis 15 Gew.-%, einer oder mehrerer der wiederkehrenden Struktureinheiten der Formel (2), vorzugsweise abgeleitet von N-Vinylpyrrolidon, und
e) 0,2 bis 3, vorzugsweise 0,5 bis 2 Gew.-%, einer oder mehrerer vernetzender Struktureinheiten, die aus Monomeren mit mindestens zwei olefinischen Doppelbindungen hervorgegangen sind.

Eine weitere besonders bevorzugte Ausführungsform der Erfindung ist ein Verfahren zur Herstellung von Polymeren enthaltend, vorzugsweise bestehend aus
a) 49,99 bis 98,99 Gew.-% einer oder mehrerer der wiederkehrenden Struktureinheiten der Formel (1),
d) 1 bis 50 Gew.-% einer oder mehrerer der wiederkehrenden Struktureinheiten abgeleitet von Monomeren der Formel (4), und
e) 0 bis 8, vorzugsweise 0,01 bis 5 Gew.-%, einer oder mehrerer vernetzender Struktureinheiten, die aus Monomeren mit mindestens zwei olefinischen Doppelbindungen hervorgegangen sind.

Unter dieser besonders bevorzugten Ausführungsform wiederum bevorzugt ist ein Verfahren zur Herstellung von Polymeren enthaltend, vorzugsweise bestehend aus
a) 69,5 bis 97,5, vorzugsweise 80 bis 96,5 Gew.-%, einer oder mehrerer der wiederkehrenden Struktureinheiten der Formel (1), vorzugsweise abgeleitet von der 2-Acrylamido-2-methyl-propan-sulfonsäure, und
d) 2,5 bis 30,5, vorzugsweise 3,5 bis 20 Gew.-%, einer oder mehrerer der wiederkehrenden Struktureinheiten abgeleitet von Monomeren der Formel (4),
   worin R⁵ für H oder -CH₃ steht, R⁶ und R⁷ unabhängig voneinander H oder -CH₃, bevorzugt H, bedeuten, R⁸ für eine lineare oder verzweigte Alkylgruppe mit 8 bis 22, vorzugsweise 12 bis 22 Kohlenstoffatomen, oder für eine lineare oder verzweigte, ein- oder mehrfach ungesättigte Alkenylgruppe mit 8 bis 22, vorzugsweise 12 bis 22 Kohlenstoffatomen, steht, v eine Zahl von 1 bis 30, bevorzugt 3 bis 25, ist, und w für 0 steht.

Unter der genannten besonders bevorzugten Ausführungsform der Erfindung weiterhin bevorzugt ist ein Verfahren zur Herstellung von Polymeren enthaltend, vorzugsweise bestehend aus
a) 69,5 bis 97,5, vorzugsweise 79,5 bis 96,5 Gew.-%, einer oder mehrerer der wiederkehrenden Struktureinheiten der Formel (1), vorzugsweise abgeleitet von der 2-Acrylamido-2-methyl-propan-sulfonsäure,
d) 2 bis 30, vorzugsweise 3 bis 20 Gew.-%, einer oder mehrerer der wiederkehrenden Struktureinheiten abgeleitet von Monomeren der Formel (4), worin R⁵ für H oder -CH₃ steht, R⁶ und R⁷ unabhängig voneinander H oder -CH₃, bevorzugt H, bedeuten, R⁸ für eine lineare oder verzweigte Alkylgruppe mit 8 bis 22, vorzugsweise 12 bis 22 Kohlenstoffatomen, oder für eine lineare oder verzweigte, ein- oder mehrfach ungesättigte Alkenylgruppe mit 8 bis 22, vorzugsweise 12 bis 22 Kohlenstoffatomen, steht, v eine Zahl von 1 bis 30, bevorzugt 3 bis 25, ist, und w für 0 steht, und
e) 0,2 bis 3, vorzugsweise 0,5 bis 2 Gew.-%, einer oder mehrerer vernetzender Struktureinheiten, die aus Monomeren mit mindestens zwei olefinischen Doppelbindungen hervorgegangen sind.

Eine weitere besonders bevorzugte Ausführungsform der Erfindung ist ein Verfahren zur Herstellung von Polymeren enthaltend, vorzugsweise bestehend aus
a) 92 bis 99,99, vorzugsweise 95 bis 99,99 Gew.-%, einer oder mehrerer der wiederkehrenden Struktureinheiten der Formel (1), und
e) 0,01 bis 8, vorzugsweise 0,01 bis 5 Gew.-%, einer oder mehrerer vernetzender Struktureinheiten, die aus Monomeren mit mindestens zwei olefinischen Doppelbindungen hervorgegangen sind.

Weiterer Gegenstand der Erfindung sind auch die nach dem erfindungsgemäßen Verfahren erhältlichen Polymere.

In einer weiteren bevorzugten Ausführungsform der Erfindung enthalten die nach dem erfindungsgemäßen Verfahren hergestellten bzw. erhältlichen Polymere eine oder mehrere Struktureinheiten der Formel (1) und eine oder mehrere Struktureinheiten ausgewählt aus den Struktureinheiten der Formel (2), den Struktureinheiten abgeleitet von den Monomeren der Formel (4) und den vernetzenden Struktureinheiten, die aus Monomeren mit mindestens zwei olefinischen Doppelbindungen hervorgegangen sind, und in einer besonders bevorzugten Ausführungsform der Erfindung bestehen die nach dem erfindungsgemäßen Verfahren hergestellten bzw. erhältlichen Polymere aus den soeben genannten Struktureinheiten.

Die nach dem erfindungsgemäßen Verfahren erhältlichen Polymere zeichnen sich aus durch ihre stark verdickende Wirkung, insbesondere in kosmetischen oder pharmazeutischen Zusammensetzungen, vorzugsweise bei Konzentrationen an Polymer von 0,1 bis 5 Gew.-%, besonders bevorzugt von 0,5 bis 2 Gew.-% und insbesondere bevorzugt von 0,7 bis 1 Gew.-%, bezogen auf die fertigen Zusammensetzungen. Bei Raumtemperatur in deionisiertem Wasser können bei einem pH-Wert von 6 bis 7 Viskositäten von mehr als 60.000 mPa·s erreicht werden.

Die nach dem erfindungsgemäßen Verfahren erhältlichen Polymere zeichnen sich neben der verdickenden Wirkung gleichzeitig auch durch eine stabilisierende Wirkung, insbesondere in kosmetischen oder pharmazeutischen Zusammensetzungen, aus.

Die nach dem erfindungsgemäßen Verfahren erhältlichen Polymere zeigen in einem weiten pH-Bereich, vorzugsweise in einem pH-Bereich von 2,5 bis 12 und besonders bevorzugt von 2,5 bis 11, nur relativ geringe Viskositätsänderungen. Außerdem behalten sie in den Formulierungen, insbesondere in den kosmetischen oder pharmazeutischen Zusammensetzungen, ihre gute Wasserlöslichkeit bei und können leicht von der Haut abgewaschen werden. Ihre verdickenden und stabilisierenden Eigenschaften kommen auch in wässrigen, wässrig-alkoholischen, alkoholischen und/oder glykolhaltigen Lösungen zur Wirkung. Sie sind UV-stabil und in einem weiten Temperaturbereich stabil.

Vorteilhaft ist auch die sehr gute Stabilität der nach dem erfindungsgemäßen Verfahren erhältlichen Polymere in alkalischen Zusammensetzungen, vorzugsweise bei pH-Werten von 8 bis 12, besonders bevorzugt bei pH-Werten von 9 bis 12 und insbesondere bevorzugt bei pH-Werten von 9 bis 11.

Durch Variation der Monomere sowie des Anteils an Vernetzer werden Polymere erhalten, die sowohl in Öl-in-Wasser Emulsionen, als auch in Wasser-in-Öl Emulsionen bei einem pH-Wert von 2,5 bis 12, vorzugsweise 2,5 bis 11, als Verdicker eingesetzt werden können.

Weiterer Gegenstand der vorliegenden Erfindung ist somit auch die Verwendung der nach dem erfindungsgemäßen Verfahren erhältlichen Polymere als Verdicker oder Stabilisator, vorzugsweise in kosmetischen oder pharmazeutischen Zusammensetzungen. Die Verwendung als Verdicker ist bevorzugt.

In einer bevorzugten Ausführungsform der Erfindung liegen die verdickten und stabilisierten, vorzugsweise die verdickten, Zusammensetzungen in Form von wässrigen Systemen, Emulsionen oder Dispersionen vor.

Abhängig davon, ob Lotionen mit vergleichsweise niedrigen oder Cremes und Salben mit hohen Viskositäten hergestellt werden sollen, enthalten Emulsionen einen Ölkörper, bestehend im Wesentlichen aus einem oder mehreren Emulgatoren und einer Ölphase in den Mengen von 5 bis 95 Gew.-%, vorzugsweise von 25 bis 85 Gew.-%, und der an 100 Gew.-% fehlenden Menge Wasser.

Als Ölkörper kommen pflanzliche, tierische, mineralische und synthetische Öle zum Einsatz, beispielsweise Guerbetalkohole mit 6 bis 18, vorzugsweise 8 bis 10 Kohlenstoffatomen, Ester von linearen C₆-C₁₃-Fettsäuren mit linearen C₆-C₂₀-Fettalkoholen, Ester von verzweigten C₆-C₁₃-Carbonsäuren mit linearen C₆-C₂₀-Fettalkoholen, Ester von linearen C₆-C₁₈-Fettsäuren mit verzweigten Alkoholen, insbesondere 2-Ethylhexanol, Ester von linearen und/oder verzweigten Fettsäuren mit mehrwertigen Alkoholen (wie z. B. Dimerdiol oder Trimerdiol) und/oder Guerbetalkoholen, Triglyceride auf Basis von C₆-C₁₀Fettsäuren, pflanzliche Öle, verzweigte primäre Alkohole, substituierte Cyclohexane, Guerbetcarbonate, Dialkylether und/oder aliphatische oder aromatische Kohlenwasserstoffe.

Die Emulsionen können als Hautpflegemittel, wie beispielsweise Tagescremes, Nachtcremes, Pflegecremes, Nährcremes, Bodylotions, Salben und dergleichen vorliegen und als weitere Hilfs- und Zusatzstoffe Co-Emulgatoren, Überfettungsmittel, Fette, Wachse, Stabilisatoren, biogene Wirkstoffe, Glycerin, Konservierungsmittel, Perlglanzmittel, Farb- und Duftstoffe enthalten.

Als Überfettungsmittel können Substanzen wie beispielsweise polyethoxilierte Lanolinderivate, Lecithinderivate, Polyolfettsäureester, Monoglyceride und Fettsäurealkanolamide verwendet werden, wobei die letzteren gleichzeitig als Schaumstabilisatoren dienen. Typische Beispiele für Fette sind Glyceride, als Wachse kommen u. a. Bienenwachs, Paraffinwachs oder Mikrowachse, gegebenenfalls in Kombination mit hydrophilen Wachsen, z. B. Cetylstearylalkohol, in Frage.

Als Stabilisatoren können Metallsalze von Fettsäuren, wie z. B. Magnesium-, Aluminium- und/oder Zinkstearat, eingesetzt werden.

Unter biogenen Wirkstoffen sind beispielsweise Pflanzenextrakte und Vitaminkomplexe zu verstehen.

Als Konservierungsmittel eignen sich beispielsweise Phenoxyethanol, Formaldehydlösung, Parabene, Pentandiol oder Sorbinsäure.

Als Perlglanzmittel kommen beispielsweise Glycoldistearinsäureester wie Ethylenglycoldistearat aber auch Fettsäuremonoglycolester in Betracht.

Als Farbstoffe können die für kosmetische Zwecke geeigneten und zugelassenen Substanzen verwendet werden, wie sie beispielsweise in der Publikation "Kosmetische Färbemittel" der Farbstoffkommission der Deutschen Forschungsgemeinschaft, Verlag Chemie, Weinheim, 1984, S. 81 - 106, zusammengestellt sind.

Der Gesamtanteil der Hiffs- und Zusatzstoffe kann 1 bis 10, vorzugsweise 2 bis 5 Gew.-%, bezogen auf die Mittel, vorzugsweise die kosmetischen oder pharmazeutischen Zusammensetzungen, betragen.

Die Herstellung der Mittel, vorzugsweise der kosmetischen oder pharmazeutischen Zusammensetzungen, kann in an sich bekannter Weise, d. h. beispielsweise durch Heiß-, Heiß/Kalt- oder PIT-Emulgierung erfolgen.

Bevorzugt ist die Verwendung der nach dem erfindungsgemäßen Verfahren erhältlichen Polymere als Verdicker oder Stabilisator, vorzugsweise als Verdicker, in Zusammensetzungen, vorzugsweise in kosmetischen oder pharmazeutischen Zusammensetzungen, deren pH-Werte auf einen Wert oberhalb von 7, bevorzugt von 8 bis 12, besonders bevorzugt von 9 bis 12 und insbesondere bevorzugt von 9 bis 11, eingestellt sind.

Bevorzugte Zusammensetzungen sind Haarglättungsmittel mit pH-Werten von 8 bis 10, bevorzugt von 9 bis 9,5, Haarentfernungsmittel, flüssige Körperreinigungsmittel, bevorzugt Körperreinigungsmittel, enthaltend Fettsäuresalze, insbesondere die der Stearin-, Palmitin- und Ölsäure, wobei die pH-Werte dieser Körperreinigungsmittel von 9 bis 11, bevorzugt von 9,5 bis 10,5, betragen können.

Weiterhin bevorzugt ist die Verwendung der nach dem erfindungsgemäßen Verfahren erhältlichen Polymere als Verdicker oder-Stabilisator, vorzugsweise als Verdicker, in alkalisch eingestellten Lotionen oder Cremes zum Glätten der Haut, oder in alkalischen Haarfärbemitteln, insbesondere in alkalischen Entwickler- oder Kupplerlösungen.

Die nach dem erfindungsgemäßen Verfahren erhältlichen Polymere sind nicht nur zum Verdicken von alkalisch eingestellten Zusammensetzungen geeignet, sondern ebenso vorteilhaft zum Verdicken von Zusammensetzungen, vorzugsweise von kosmetischen oder pharmazeutischen Zusammensetzungen, mit pH-Werten unterhalb von 7, bevorzugt von 3 bis 6,5, besonders bevorzugt von 3,5 bis 5,5 und insbesondere bevorzugt von 4 bis 5. Eine Verfärbung der Zusammensetzungen, wie man es bei Verwendung der Ammonium-Salze dieser Polymere beobachtet, unterbleibt in Gegenwart der nach dem erfindungsgemäßen Verfahren erhältlichen Polymere.

Weiterhin bevorzugt ist die Verwendung der nach dem erfindungsgemäßen Verfahren erhältlichen Polymere als Verdicker oder Stabilisator, vorzugsweise als Verdicker, in Selbstbräunungsmitteln enthaltend 0,1 bis 10 Gew.-% an Dihydroxyaceton, bezogen auf die fertigen Mittel, wobei diese Selbstbräunungsmittel bevorzugt auf einen pH-Wert von 3,5 bis 5,5, besonders bevorzugt von 4 bis 5, eingestellt sind.

Ein weiterer Gegenstand der Erfindung betrifft auch Selbstbräunungsmittel enthaltend ein oder mehrere der nach dem erfindungsgemäßen Verfahren erhältlichen Polymere und 0,1 bis 10 Gew.-% an Dihydroxyaceton, bezogen auf die fertigen Mittel, wobei diese Selbstbräunungsmittel bevorzugt auf einen pH-Wert von 3,5 bis 5,5, besonders bevorzugt von 4 bis 5, eingestellt sind. In diesen Selbstbräunungsmitteln sind das eine oder die mehreren der nach dem erfindungsgemäßen Verfahren erhältlichen Polymere vorzugsweise von 0,1 bis 5 Gew.-% und besonders bevorzugt von 0,5 bis 2 Gew.-% enthalten, bezogen auf die fertigen Mittel.

Die nachfolgenden Beispiele sollen die Anwendungsmöglichkeiten der nach dem erfindungsgemäßen Verfahren erhältlichen Polymere näher erläutern, ohne diese darauf einzuschränken. Die Prozentangaben sind in allen Fällen Gewichtsprozente (Gew.-%).

### Beispiel 1:

### Aristoflex^{®} AVC, Ionenaustausch von NH₄⁺ gegen Na⁺

4.432 g Aristoflex^{®} AVC (Ammonium Acryloyldimethyltaurate/VP Copolymer, vernetzt, Clariant, VP: Vinylpyrrolidon) werden in einen Reaktor, ausgestattet mit Impellerrührer, pH-Elektrode, Temperaturfühler, Rückflusskühler, Einleitungsrohr für N₂ und einer Dosiermöglichkeit für Natronlauge, vorgelegt und unter Rühren bei 330 Umdrehungen/Minute in 16.450 g tert.-Butanol suspendiert und erwärmt (N₂-Strom 60 l/h). Ab einer Innentemperatur von 50 °C wird über eine Schlauchquetschpumpe 1.329 g NaOH (50 Gew.-%ig in Wasser, d. h. 664,5 g NaOH in 664,5 g Wasser) mit einer Tropfgeschwindigkeit von 4,9 g/Minute in den Reaktor zudosiert. Die Innentemperatur wird dabei bis zur Siedetemperatur gesteigert.

Der pH-Wert steigt von anfangs 4,5 an und wird über die Dosierrate zwischen 7,5 und 8,5 gehalten.

Der entstehende Ammoniak wird über eine Waschflasche befüllt mit Schwefelsäure (25 Gew.-%ig in Wasser) als Ammoniumsulfat abgefangen.

Nach Beendigung der Zudosierung wird der Ansatz 1,5 Stunden unter Rückfluss nachgerührt. Dabei wird 30 Minuten lang Ammoniakgas aus dem Ansatz ausgetrieben. Die Suspension wird unter Rühren auf 40 °C abgekühlt, der Ansatz auf Bleche gegossen und 2 Tage im Vakuumschrank bei 50 °C und 20 mbar getrocknet.

Es wurde ein Produkt erhalten, in dem ≥ 95 mol-% der auszutauschenden Ionen im Aristoflex^{®} AVC durch Na⁺-Ionen ausgetauscht worden sind.

### Beispiel 1a:

Beispiel 1 wurde wiederholt, wobei jedoch anstelle von 1.329 g nun 1.371 g NaOH (50 Gew.-%ig in Wasser, d. h. 685,5 g NaOH in 685,5 g Wasser) eingesetzt wurden. Es wurde ein Produkt erhalten, in dem ≥ 98 mol-% der auszutauschenden Ionen im Aristoflex^{®} AVC durch Na⁺-Ionen ausgetauscht worden sind.

### Beispiel 2:

### Aristoflex^{®} HMB, Ionenaustausch von NH₄⁺ gegen Na⁺

100,0 g Aristoflex^{®} HMB (Ammonium Acryloyldimethyltaurate/Beheneth-25 Methacrylate, vernetzt, Clariant) werden in einen Reaktor, ausgestattet mit Ankerrührer, pH-Elektrode, Temperaturfühler, Rückflusskühler, Einleitungsrohr für N₂ und einer Dosiermöglichkeit für Natronlauge, vorgelegt und unter Rühren bei 330 Umdrehungen/Minute in 400 g tert.-Butanol suspendiert und erwärmt (N₂-Strom: 60 l/h). Ab einer Innentemperatur von 50 °C wird über eine Schlauchquetschpumpe 30,3 g NaOH (50 Gew.%ig in Wasser, d. h. 15,15 g NaOH in 15,15 g Wasser) mit einer Tropfgeschwindigkeit von 0,50 g/Minute in den Reaktor zudosiert. Die Innentemperatur wird dabei bis zur Siedetemperatur gesteigert.

Der pH-Wert steigt von anfangs 3,3 an und wird über die Dosierrate zwischen 7,5 und 8,5 gehalten.

Der entstehende Ammoniak wird über eine Waschflasche befüllt mit Schwefelsäure (25 Gew.-%ig in Wasser) als Ammoniumsulfat abgefangen.

Nach Beendigung der Zudosierung wird der Ansatz 1,5 Stunden unter Rückfluss nachgerührt. Dabei wird 15 Minuten lang Ammoniakgas aus dem Ansatz ausgetrieben. Die Suspension wird unter Rühren auf 30 °C abgekühlt, der Ansatz auf Bleche gegossen und über Nacht im Vakuumschrank bei 50 °C und 20 mbar getrocknet.

Es wurde ein Produkt erhalten, in dem ≥ 95 mol-% der auszutauschenden Ionen im Aristoflex^{®} HMB durch Na⁺-Ionen ausgetauscht worden sind.

Der Begriff "Beheneth-25 Methacrylate" in Aristoflex^{®} HMB bedeutet, dass dieses Copolymer Struktureinheiten der Formel (4) enthält, worin R⁶ und R⁷ H sind, R⁵ CH₃ ist, v 25 ist, w 0 ist und R⁸ Behenyl ist.

### Formulierungsbeispiele

### Formulierungsbeispiel 1: O/W Selbstbräunungscreme

| | | | |
|---|---|---|---|
| A | Hostaphat^{®} CC 100 | (Clariant) | 1,0 % |
| | Cetyl Phosphat | | |
| | Glyceryl Stearat | | 0,5 % |
| | Cetearyl Alkohol | | 0,5 % |
| | Isohexadecan | | 8,0 % |
| | Isopropyl Palmitat | | 7,0 % |
| | SilCare^{®} Silicone 41 M 15 | (Clariant) | 1,0 % |
| | Caprylyl Methicon | | |
| | | | |
| B | Natrium Acryloyldimethyltaurat/VP Copolymer (vemetzt) | | 1,5 % |
| C | Wasser | | ad 100 % |
| | Hostapon^{®} CGN | (Clariant) | 0,5 % |
| | Natrium Cocoyl Glutamat | | |
| | Glycerin | | 5,0 % |
| | Natriumhydroxid (10 Gew.-% in Wasser) | | 0,4% |
| | | | |
| D | Tocopheryl Acetat | | 1,0 % |
| | Duftstoff | | 0,2 % |
| | Konservierungsmittel | | q.s. |
| | | | |
| E | Dihydroxyaceton | | 5,0 % |
| | Wasser | | 8,0 % |

### Herstellung:

| | |
|---|---|
| I | Schmelzen der Komponente A bei ca. 80 °C. |
| II | Einrühren von B in A. |
| III | Zugabe von C und Abkühlen unter Rühren. |
| IV | Bei ca. 30 °C Einrühren von D in III. |
| V | Lösen von Dihydroxyaceton in Wasser und Zugabe von E zu IV. |
| VI | Gegebenenfalls Einstellen des pH-Wertes auf ca. 4. |

Viskosität (Brookfield, 20 °C, 20 Umdrehungen/Minute): 29.000 mPa·s

### Formulierungsbeispiel 2: Selbstbräunungsgel

| | | |
|---|---|---|
| A | Dihydroxyaceton | 5,0 % |
| | 1,2-Propandiol | 2,5 % |
| | Sorbitol F flüssig | 2,5 % |
| | Methyl-4-hydroxybenzoat | 0,2 % |
| | Wasser, demineralisiert | 28,3 % |
| B | Natrium Acryloyldimethyltaurat/VP Copolymer (vemetzt) | 1,5 % |
| | Wasser, demineralisiert | ad 100 % |

### Herstellung:

| | |
|---|---|
| I | Zugabe von Natrium Acryloyldimethyltaurat/VP Copolymer zu Wasser unter kräftigem Rühren. |
| II | Lösen von Dihydroxyaceton in Wasser und nacheinander Zugabe der Komponenten A unter Rühren. |
| III | Zusammenfügen von I und II und homogenisieren. |

## Patentansprüche

1. Verfahren zur Herstellung von Polymeren enthaltend
a) eine oder mehrere der wiederkehrenden Struktureinheiten der Formel (1) 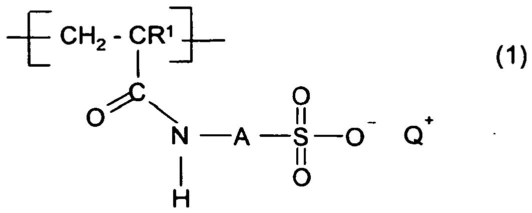 worin R¹ Wasserstoff, Methyl oder Ethyl bedeutet, A C₁-C₈-Alkylen bedeutet, Q⁺ H⁺, NH₄⁺, Na⁺, K⁺, ½ Mg⁺⁺, ½ Ca⁺⁺ oder ½ Zn⁺⁺ bedeutet, und wobei in 50 bis 100 mol-%, vorzugsweise in 80 bis 100 mol-%, besonders bevorzugt in 90 bis 100 mol-% und insbesondere bevorzugt in 98 bis 100 mol-% der Struktureinheiten der Formel (1) Q⁺ eine andere Bedeutung als H⁺ oder NH₄⁺ besitzt,
b) optional eine oder mehrere der wiederkehrenden Struktureinheiten der Formel (2) 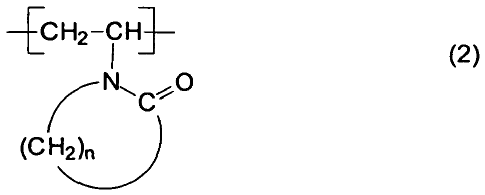 worin n eine ganze Zahl von 2 bis 9 bedeutet,
c) optional eine oder mehrere der wiederkehrenden Struktureinheiten der Formel (3) 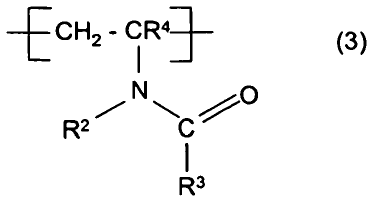 worin R², R³ und R⁴ gleich oder verschieden sein können und Wasserstoff, eine lineare oder verzweigte Alkylgruppe mit 1 bis 30, bevorzugt 1 bis 20 und besonders bevorzugt 1 bis 12 C-Atomen oder eine lineare oder verzweigte ein- oder mehrfach ungesättigte Alkenylgruppe mit 2 bis 30, bevorzugt 2 bis 20 und besonders bevorzugt 2 bis 12 C-Atomen, bedeuten,
d) optional eine oder mehrere der wiederkehrenden Struktureinheiten abgeleitet von Monomeren der Formel (4) 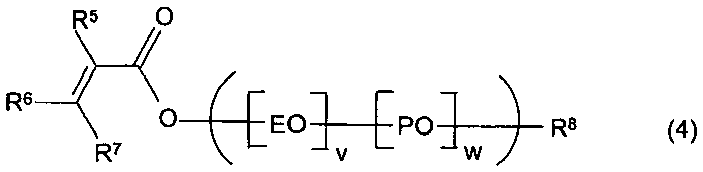 worin R⁵ für H oder -CH₃ steht, R⁶ und R⁷ unabhängig voneinander H oder -CH₃, bevorzugt H, bedeuten, R⁸ für eine lineare oder verzweigte Alkylgruppe mit 1 bis 30, vorzugsweise 8 bis 22 und besonders bevorzugt 12 bis 18 Kohlenstoffatomen, für eine lineare oder verzweigte, ein- oder mehrfach ungesättigte Alkenylgruppe mit 2 bis 30, vorzugsweise 8 bis 22 und besonders bevorzugt 12 bis 18 Kohlenstoffatomen oder für einen cycloaliphatischen, arylaliphatischen oder aromatischen Kohlenwasserstoffrest mit 6 bis 30 Kohlenstoffatomen steht, EO für eine Ethylenoxideinheit steht, PO für eine Propylenoxideinheit steht, v und w unabhängig voneinander für Zahlen von 0 bis 500 stehen, die Summe aus v und w im Mittel ≥ 1 ist und die Verteilung der EO- und PO-Einheiten über die Gruppe -(-[EO]ᵥ-[PO]_{w}-)- statistisch, blockartig, alternierend oder gradientenartig sein kann, und
e) optional eine oder mehrere vernetzende Struktureinheiten, die aus Monomeren mit mindestens zwei olefinischen Doppelbindungen hervorgegangen sind,
mit der Maßgabe, dass die Polymere eine oder mehrere Struktureinheiten ausgewählt aus b) bis e) enthalten,
**dadurch gekennzeichnet, dass** die entsprechenden Salze dieser Polymere, worin jedoch die Kationen Q⁺ in den Struktureinheiten der Formel (1) NH₄⁺ und gegebenenfalls zusätzlich H⁺ bedeuten, als Edukt in einem organischen Lösungsmittel suspendiert werden und durch Zugabe von einer oder mehreren Basen enthaltend Na⁺, K⁺, Mg⁺⁺, Ca⁺⁺ oder Zn⁺⁺-Ionen ein Ionenaustausch erfolgt.

2. Verfahren nach Anspruch 1, **dadurch gekennzeichnet, dass** das Edukt 50 bis 100 mol-% der Struktureinheiten der Formel (1) mit NH₄⁺ als Gegenion und 0 bis 50 mol-% der Struktureinheiten der Formel (1) mit H⁺ als Gegenion enthält, vorzugsweise 80 bis 100 mol-% der Struktureinheiten der Formel (1) mit NH₄⁺ als Gegenion und 0 bis 20 mol-% der Struktureinheiten der Formel (1) mit H⁺ als Gegenion enthält, besonders bevorzugt 90 bis 100 mol-% der Struktureinheiten der Formel (1) mit NH₄⁺ als Gegenion und 0 bis 10 mol-% der Struktureinheiten der Formel (1) mit H⁺ als Gegenion enthält und insbesondere bevorzugt 98 bis 100 mol-% der Struktureinheiten der Formel (1) mit NH₄⁺ als Gegenion und 0 bis 2 mol-% der Struktureinheiten der Formel (1) mit H⁺ als Gegenion enthält.

3. Verfahren nach Anspruch 1 oder 2, **dadurch gekennzeichnet, dass** das Edukt 100 mol-% der Struktureinheiten der Formel (1) mit NH₄⁺ als Gegenion enthält.

4. Verfahren nach einem oder mehreren der Ansprüche 1 bis 3, **dadurch gekennzeichnet, dass** das organische Lösungsmittel ein protisches Lösungsmittel ist.

5. Verfahren nach einem oder mehreren der Ansprüche 1 bis 4, **dadurch gekennzeichnet, dass** das organische Lösungsmittel tert.-Butanol ist.

6. Verfahren nach einem oder mehreren der Ansprüche 1 bis 5, **dadurch gekennzeichnet, dass** die Basen aus Hydroxiden und Alkoxylaten ausgewählt sind.

7. Verfahren nach einem oder mehreren der Ansprüche 1 bis 6, **dadurch gekennzeichnet, dass** die Basen ausgewählt sind aus Hydroxiden und Alkoxylaten von Na⁺, K⁺ und/oder Zn⁺⁺.

8. Verfahren nach einem oder mehreren der Ansprüche 1 bis 7, **dadurch gekennzeichnet, dass** die Base NaOH ist.

9. Verfahren nach einem oder mehreren der Ansprüche 1 bis 8, **dadurch gekennzeichnet, dass** es bei einer Temperatur von 25 bis 100 °C durchgeführt wird.

10. Verfahren nach einem oder mehreren der Ansprüche 1 bis 9, **dadurch gekennzeichnet, dass** es unter Durchleitung von Inertgas, vorzugsweise Stickstoff, besonders bevorzugt bei einer Durchflussrate von 40 bis 80 l/h, durchgeführt wird.

11. Verfahren nach einem oder mehreren der Ansprüche 1 bis 10, **dadurch gekennzeichnet, dass** es bei einem pH-Wert von 7,5 bis 8,5 durchgeführt wird.

12. Verfahren nach einem oder mehreren der Ansprüche 1 bis 11, **dadurch gekennzeichnet, dass** sich die Struktureinheiten der Formel (1) von der 2-Acrylamido-2-methyl-propan-sulfonsäure ableiten.

13. Verfahren nach einem oder mehreren der Ansprüche 1 bis 12, **dadurch gekennzeichnet, dass** sich die Struktureinheiten der Formel (2) von N-Vinylpyrrolidon ableiten.

14. Verfahren nach einem oder mehreren der Ansprüche 1 bis 13, **dadurch gekennzeichnet, dass** R², R³ und R⁴ in den Struktureinheiten der Formel (3) unabhängig voneinander Wasserstoff oder Methyl bedeuten.

15. Verfahren nach einem oder mehreren der Ansprüche 1 bis 14, **dadurch gekennzeichnet, dass** R⁸ in den Struktureinheiten abgeleitet von den Monomeren der Formel (4) für eine lineare oder verzweigte Alkylgruppe mit 8 bis 22 und bevorzugt 12 bis 18 Kohlenstoffatomen, oder für eine lineare oder verzweigte, ein- oder mehrfach ungesättigte Alkenylgruppe mit 8 bis 22 und bevorzugt 12 bis 18 Kohlenstoffatomen, steht.

16. Verfahren nach einem oder mehreren der Ansprüche 1 bis 15, **dadurch gekennzeichnet, dass** die Summe aus v und w in den Struktureinheiten abgeleitet von den Monomeren der Formel (4) im Mittel von 1 bis 40, vorzugsweise von 3 bis 40, besonders bevorzugt von 5 bis 30, insbesondere bevorzugt von 8 bis 25 und außerordentlich bevorzugt von 10 bis 25, ist.

17. Verfahren nach einem oder mehreren der Ansprüche 1 bis 16, **dadurch gekennzeichnet, dass** die Polymere keine vernetzenden Struktureinheiten der Komponente e) enthalten.

18. Verfahren nach einem oder mehreren der Ansprüche 1 bis 16, **dadurch gekennzeichnet, dass** die Polymere bis zu 8, vorzugsweise von 0,01 bis 8, besonders bevorzugt von 0,01 bis 5 und insbesondere bevorzugt von 0,02 bis 3 Gew.-% an einer oder mehreren vernetzenden Struktureinheiten der Komponente e) enthalten.

19. Verfahren nach einem oder mehreren der Ansprüche 1 bis 16 und 18, **dadurch gekennzeichnet, dass** ein Polymer enthaltend
a) 69,5 bis 97,5, vorzugsweise 84,5 bis 96,5 Gew.-%, einer oder mehrerer der wiederkehrenden Struktureinheiten der Formel (1), vorzugsweise abgeleitet von der 2-Acrylamido-2-methyl-propan-sulfonsäure,
b) 2 bis 30, vorzugsweise 3 bis 15 Gew.-%, einer oder mehrerer der wiederkehrenden Struktureinheiten der Formel (2), vorzugsweise abgeleitet von N-Vinylpyrrolidon, und
e) 0,2 bis 3, vorzugsweise 0,5 bis 2 Gew.-%, einer oder mehrerer vernetzender Struktureinheiten, die aus Monomeren mit mindestens zwei olefinischen Doppelbindungen hervorgegangen sind,
hergestellt wird.

20. Verfahren nach einem oder mehreren der Ansprüche 1 bis 18, **dadurch gekennzeichnet, dass** ein Polymer enthaltend
a) 49,99 bis 98,99 Gew.-% einer oder mehrerer der wiederkehrenden Struktureinheiten der Formel (1),
d) 1 bis 50 Gew.-% einer oder mehrerer der wiederkehrenden Struktureinheiten abgeleitet von den Monomeren der Formel (4), und
e) 0 bis 8, vorzugsweise 0,01 bis 5 Gew.-%, einer oder mehrerer vernetzender Struktureinheiten, die aus Monomeren mit mindestens zwei olefinischen Doppelbindungen hervorgegangen sind,
hergestellt wird.

21. Verwendung eines Polymers, erhältlich nach einem Verfahren gemäß einem oder mehreren der Ansprüche 1 bis 20, als Verdicker oder Stabilisator in Selbstbräunungsmitteln enthaltend 0,1 bis 10 Gew.-% an Dihydroxyaceton, bezogen auf die fertigen Mittel, wobei diese Selbstbräunungsmittel bevorzugt auf einen pH-Wert von 3,5 bis 5,5, besonders bevorzugt von 4 bis 5, eingestellt sind.

22. Selbstbräunungsmittel enthaltend ein oder mehrere Polymere, erhältlich nach einem Verfahren gemäß einem oder mehreren der Ansprüche 1 bis 20, und 0,1 bis 10 Gew.-% an Dihydroxyaceton, bezogen auf die fertigen Mittel, wobei diese Selbstbräunungsmittel bevorzugt auf einen pH-Wert von 3,5 bis 5,5, besonders bevorzugt von 4 bis 5, eingestellt sind.

## Claims

1. A method of producing polymers containing
a) one or more of the structural repeat units of formula (1) 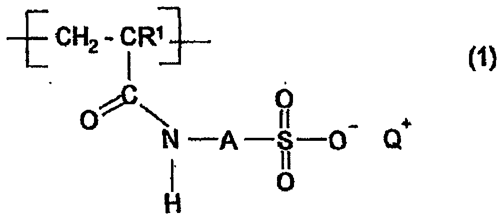 where R¹ is hydrogen, methyl or ethyl, A is C₁-C₈-alkylene, Q⁺ is H⁺, NH₄⁺, Na⁺, K⁺, ½Mg⁺⁺, ½Ca⁺⁺ or ½Zn⁺⁺ subject to the proviso that in from 50 to 100 mol%, preferably in from 80 to 100 mol%, more preferably in from 90 to 100 mol% and even more preferably in from 98 to 100 mol% of the structural units of formula (1) Q⁺ has a meaning other than H⁺ or NH₄⁺,
b) optionally one or more of the structural repeat units of formula (2) 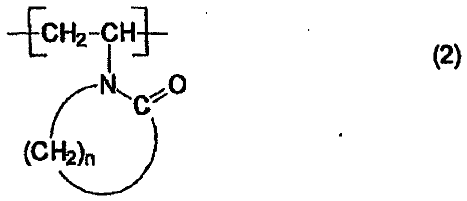 where n is an integer from 2 to 9,
c) optionally one or more of the structural repeat units of formula (3) 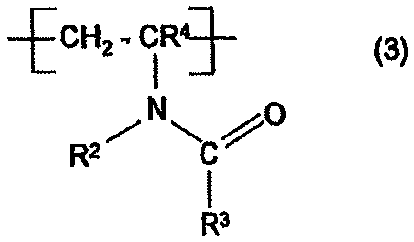 where R², R³ and R⁴ may be the same or different and are each hydrogen, a linear or branched alkyl group having from 1 to 30, preferably from 1 to 20 and more preferably from 1 to 12 carbon atoms or a linear or branched mono- or polyunsaturated alkenyl group having from 2 to 30, preferably from 2 to 20 and more preferably from 2 to 12 carbon atoms,
d) optionally one or more of the structural repeat units derived from monomers of formula (4) 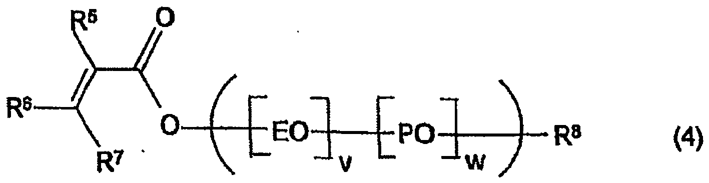 where R⁵ is H or -CH₃, R⁶ and R⁷ are each independently H or -CH₃, preferably H, R⁸ is a linear or branched alkyl group having from 1 to 30, preferably from 8 to 22 and more preferably from 12 to 18 carbon atoms, a linear or branched mono- or polyunsaturated alkenyl group having from 2 to 30, preferably from 8 to 22 and more preferably from 12 to 18 carbon atoms, or a cycloaliphatic, arylaliphatic or aromatic hydrocarbyl radical having from 6 to 30 carbon atoms, EO is an ethylene oxide unit, PO is a propylene oxide unit, v and w are each independently from 0 to 500, the sum total of v and w is on average ≥ 1, and the distribution of the EO and PO units across the -(-[EO]ᵥ-[PO]_{w}-)-group can be random, blocklike, alternating or gradientlike, and
e) optionally one or more crosslinking structural units derived from monomers having two or more olefinic double bonds,
with the proviso that the polymers contain one or more structural units selected from b) to e),
which method comprises suspending the corresponding salts of these polymers, but in which the Q⁺ cations in the structural units of formula (1) have the meanings of NH₄⁺ and additionally, where appropriate, H⁺, as a starting material in an organic solvent and adding one or more bases containing Na⁺, K⁺, Mg⁺⁺, Ca⁺⁺ or Zn⁺⁺ ions to effect an ion exchange.

2. The method as claimed in claim 1, wherein the starting material contains from 50 to 100 mol% of the structural units of formula (1) with NH₄⁺ as counterion and from 0 to 50 mol% of the structural units of formula (1) with H⁺ as counterion, preferably from 80 to 100 mol% of the structural units of formula (1) with NH₄⁺ as counterion and from 0 to 20 mol% of the structural units of formula (1) with H⁺ as counterion, more preferably from 90 to 100 mol% of the structural units of formula (1) with NH₄⁺ as counterion and from 0 to 10 mol% of the structural units of formula (1) with H⁺ as counterion, and even more preferably from 98 to 100 mol% of the structural units of formula (1) with NH₄⁺ as counterion and from 0 to 2 mol% of the structural units of formula (1) with H⁺ as counterion.

3. The method as claimed in claim 1 or 2, wherein the starting material contains 100 mol% of the structural units of formula (1) with NH₄⁺ as counterion.

4. The method as claimed in one or more of claims 1 to 3, wherein the organic solvent is a protic solvent.

5. The method as claimed in one or more of claims 1 to 4, wherein the organic solvent is tert-butanol.

6. The method as claimed in one or more of claims 1 to 5, wherein the bases are selected from hydroxides and alkoxylates.

7. The method as claimed in one or more of claims 1 to 6, wherein the bases are selected from hydroxides and alkoxylates of Na⁺, K⁺ and/or Zn⁺⁺.

8. The method as claimed in one or more of claims 1 to 7, wherein the base is NaOH.

9. The method as claimed in one or more of claims 1 to 8, carried out at a temperature in the range from 25 to 100°C.

10. The method as claimed in one or more of claims 1 to 9, carried out by passing an inert gas, preferably nitrogen and more preferably at a flow rate in the range from 40 to 80 l/h, through.

11. The method as claimed in one or more of claims 1 to 10, carried out at a pH in the range from 7.5 to 8.5.

12. The method as claimed in one or more of claims 1 to 11, wherein the structural units of formula (1) are derived from 2-acrylamido-2-methylpropanesulfonic acid.

13. The method as claimed in one or more of claims 1 to 12, wherein the structural units of formula (2) are derived from N-vinylpyrrolidone.

14. The method as claimed in one or more of claims 1 to 13, wherein R², R³ and R⁴ in the structural units of formula (3) are each independently hydrogen or methyl.

15. The method as claimed in one or more of claims 1 to 14, wherein R⁸ in the structural units derived from the monomers of formula (4) is a linear or branched alkyl group having from 8 to 22 and preferably from 12 to 18 carbon atoms, or is a linear or branched mono- or polyunsaturated alkenyl group having from 8 to 22 and preferably from 12 to 18 carbon atoms.

16. The method as claimed in one or more of claims 1 to 15, wherein the sum total of v and w in the structural units derived from the monomers of formula (4) is on average in the range from 1 to 40, preferably in the range from 3 to 40, more preferably in the range from 5 to 30, even more preferably in the range from 8 to 25 and yet even more preferably in the range from 10 to 25.

17. The method as claimed in one or more of claims 1 to 16, wherein the polymers do not contain any crosslinking structural units of component e).

18. The method as claimed in one or more of claims 1 to 16, wherein the polymers contain up to 8%, preferably from 0.01% to 8%, more preferably from 0.01% to 5% and even more preferably from 0.02% to 3% by weight of one or more crosslinking structural units of component e).

19. The method as claimed in one or more of claims 1 to 16 and 18, wherein a polymer containing
a) from 69.5% to 97.5% and preferably from 84.5% to 96.5% by weight of one or more of the structural repeat units of formula (1), preferably derived from 2-acrylamido-2-methylpropanesulfonic acid,
b) from 2% to 30% and preferably from 3% to 15% by weight of one or more of the structural repeat units of formula (2), preferably derived from N-vinylpyrrolidone, and
e) from 0.2% to 3% and preferably from 0.5% to 2% by weight of one or more crosslinking structural units derived from monomers having two or more olefinic double bonds,
is produced.

20. The method as claimed in one or more of claims 1 to 18, wherein a polymer containing
a) from 49.99% to 98.99% by weight of one or more of the structural repeat units of formula (1),
d) from 1% to 50% by weight of one or more of the structural repeat units derived from the monomers of formula (4), and
e) from 0% to 8% and preferably from 0.01% to 5% by weight of one or more crosslinking structural units derived from monomers having two or more olefinic double bonds,
is produced.

21. The use of a polymer, obtainable by a method as claimed in one or more of claims 1 to 20, as a thickener or stabilizer in self-tanning agents containing from 0.1% to 10% by weight of dihydroxyacetone, based on the final agents, wherein these self-tanning agents are preferably adjusted to a pH in the range from 3.5 to 5.5 and more preferably in the range from 4 to 5.

22. A self-tanning agent containing one or more polymers, obtainable by a method as claimed in one or more of claims 1 to 20, and from 0.1% to 10% by weight of dihydroxyacetone, based on the final agent, wherein this self-tanning agent is preferably adjusted to a pH in the range from 3.5 to 5.5 and more preferably from 4 to 5.

## Revendications

1. Procédé pour la préparation de polymères, contenant
a) une ou plusieurs des unités structurelles répétitives de formule (1) 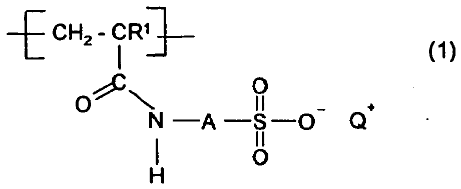 où R¹ signifie hydrogène, méthyle ou éthyle, A signifie C₁-C₈-alkylène, Q⁺ signifie H⁺, NH₄⁺, Na⁺, K⁺, 1/2 Mg⁺⁺, 1/2 Ca⁺⁺ ou 1/2 Zn⁺⁺, et où, dans 50 à 100% en mole, de préférence dans 80 à 100% en mole, de manière particulièrement préférée dans 90 à 100% en mole et en particulier de préférence dans 98 à 100% en mole des unités structurelles de formule (1), Q⁺ présente une autre signification que H⁺ ou NH₄⁺,
b) éventuellement une ou plusieurs des unités structurelles répétitives de formule (2) 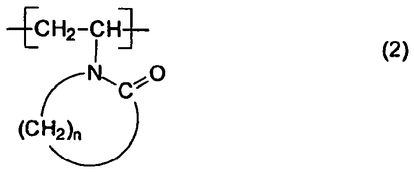 où n signifie un nombre entier de 2 à 9,
c) éventuellement une ou plusieurs des unités structurelles répétitives de formule (3) 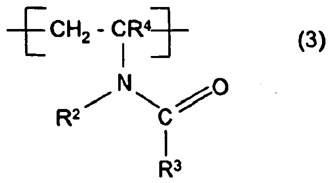 où R², R³ et R⁴ peuvent être identiques ou différents et signifient hydrogène, un groupe alkyle linéaire ou ramifié, comprenant 1 à 30, de préférence 1 à 20 et de manière particulièrement préférée 1 à 12 atomes de carbone, ou un groupe alcényle linéaire ou ramifié, monoinsaturé ou polyinsaturé comprenant 2 à 30, de préférence 2 à 20 et de manière particulièrement préférée 2 à 12 atomes de carbone,
d) éventuellement une ou plusieurs des unités structurelles répétitives dérivées de monomères de formule (4) 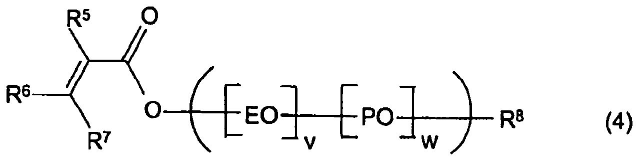 où R⁵ représente H ou -CH₃, R⁶ et R⁷ signifient, indépendamment l'un de l'autre, H ou -CH₃, de préférence H, R⁸ représente un groupe alkyle linéaire ou ramifié comprenant 1 à 30, de préférence 8 à 22 et de manière particulièrement préférée 12 à 18 atomes de carbone, un groupe alcényle linéaire ou ramifié, monoinsaturé ou polyinsaturé, comprenant 2 à 30, de préférence 8 à 22 et de manière particulièrement préférée 12 à 18 atomes de carbone ou un radical hydrocarboné cycloaliphatique, arylaliphatique ou aromatique comprenant 6 à 30 atomes de carbone, EO représente une unité d'oxyde d'éthylène, PO représente une unité d'oxyde de propylène, v et w représentent, indépendamment l'un de l'autre, des nombres de 0 à 500, la somme de v et w est en moyenne ≥ 1 et la répartition des unités EO et PO sur le groupe -(-[EO]ᵥ-[PO]_{w}-)- peut être statistique, par blocs, en alternance ou par gradient, et
e) éventuellement une ou plusieurs unités structurelles réticulantes, qui proviennent de monomères présentant au moins deux doubles liaisons oléfiniques,
à condition que les polymères contiennent une ou plusieurs unités structurelles choisies parmi b) à e), **caractérisé en ce que** les sels correspondants de ces polymères, mais dans lesquels les cations Q⁺ dans les unités structurelles de formule (1) signifient NH₄⁺ et le cas échéant en outre H⁺, sont mis en suspension comme produit de départ dans un solvant organique et qu'un échange d'ions a lieu par addition d'une ou de plusieurs bases contenant des ions Na⁺, K⁺, Mg⁺⁺, Ca⁺⁺ ou
Zn⁺⁺.

2. Procédé selon la revendication 1, **caractérisé en ce que** le produit de départ contient 50 à 100% en mole des unités structurelles de formule (1) présentant NH₄⁺ comme contre-ion et 0 à 50% en mole des unités structurelles de formule (1) présentant H⁺ comme contre-ion, de préférence 80 à 100% en mole des unités structurelles de formule (1) présentant NH₄⁺ comme contre-ion et 0 à 20% en mole des unités structurelles de formule (1) présentant H⁺ comme contre-ion, de manière particulièrement préférée 90 à 100% en mole des unités structurelles de formule (1) présentant NH₄⁺ comme contre-ion et 0 à 10% en mole des unités structurelles de formule (1) présentant H⁺ comme contre-ion et en particulier de préférence 98 à 100% en mole des unités structurelles de formule (1) présentant NH₄⁺ comme contre-ion et 0 à 2% en mole des unités structurelles de formule (1) présentant H⁺ comme contre-ion.

3. Procédé selon la revendication 1 ou 2, **caractérisé en ce que** le produit de départ contient 100% en mole des unités structurelles de formule (1) présentant NH₄⁺ comme contre-ion.

4. Procédé selon l'une ou plusieurs des revendications 1 à 3, **caractérisé en ce que** le solvant organique est un solvant protique.

5. Procédé selon l'une ou plusieurs des revendications 1 à 4, **caractérisé en ce que** le solvant organique est le tert-butanol.

6. Procédé selon l'une ou plusieurs des revendications 1 à 5, **caractérisé en ce que** les bases sont choisies parmi les hydroxydes et les alcoxylates.

7. Procédé selon l'une ou plusieurs des revendications 1 à 6, **caractérisé en ce que** les bases sont choisies parmi les hydroxydes et les alcoxylates de Na⁺, K⁺ et/ou Zn⁺⁺.

8. Procédé selon l'une ou plusieurs des revendications 1 à 7, **caractérisé en ce que** la base est NaOH.

9. Procédé selon l'une ou plusieurs des revendications 1 à 8, **caractérisé en ce qu'**il est réalisé à une température de 25 à 100°C.

10. Procédé selon l'une ou plusieurs des revendications 1 à 9, **caractérisé en ce qu'**il est réalisé en faisant passer un gaz inerte, de préférence de l'azote, de manière particulièrement préférée à un débit de 40 à 80 l/h.

11. Procédé selon l'une ou plusieurs des revendications 1 à 10, **caractérisé en ce qu'**il est réalisé à un pH de 7,5 à 8,5.

12. Procédé selon l'une ou plusieurs des revendications 1 à 11, **caractérisé en ce que** les unités structurelles de formule (1) sont dérivées de l'acide 2-acrylamido-2-méthylpropanesulfonique.

13. Procédé selon l'une ou plusieurs des revendications 1 à 12, **caractérisé en ce que** les unités structurelles de formule (2) sont dérivées de la N-vinylpyrrolidone.

14. Procédé selon l'une ou plusieurs des revendications 1 à 13, **caractérisé en ce que** R², R³ et R⁴ dans les unités structurelles de formule (3) signifient, indépendamment l'un de l'autre, hydrogène ou méthyle.

15. Procédé selon l'une ou plusieurs des revendications 1 à 14, **caractérisé en ce que** R⁸ dans les unités structurelles dérivées des monomères de formule (4) représente un groupe alkyle linéaire ou ramifié, comprenant 8 à 22 et de préférence 12 à 18 atomes de carbone, ou un groupe alcényle linéaire ou ramifié, monoinsaturé ou polyinsaturé comprenant 8 à 22 et de préférence 12 à 18 atomes de carbone.

16. Procédé selon l'une ou plusieurs des revendications 1 à 15, **caractérisé en ce que** la somme de v et w dans les unités structurelles dérivées des monomères de formule (4) vaut en moyenne 1 à 40, de préférence 3 à 40, de manière particulièrement préférée 5 à 30, en particulier de préférence 8 à 25 et de manière tout particulièrement préférée 10 à 25.

17. Procédé selon l'une ou plusieurs des revendications 1 à 16, **caractérisé en ce que** les polymères ne contiennent pas d'unités structurelles réticulantes du composant e).

18. Procédé selon l'une ou plusieurs des revendications 1 à 16, **caractérisé en ce que** les polymères contiennent jusqu'à 8, de préférence 0,01 à 8%, de manière particulièrement préférée 0,01 à 5% et en particulier de préférence 0,02 à 3% en poids d'une ou de plusieurs unités structurelles réticulantes du composant e).

19. Procédé selon l'une ou plusieurs des revendications 1 à 16 et 18, **caractérisé en ce qu'**on prépare un polymère contenant
a) 69,5 à 97,5, de préférence 84,5 à 96,5% en poids, d'une ou de plusieurs des unités structurelles répétitives de formule (1), de préférence dérivées de l'acide 2-acrylamido-2-méthylpropanesulfonique,
b) 2 à 30, de préférence 3 à 15% en poids, d'une ou de plusieurs des unités structurelles répétitives de formule (2), de préférence dérivées de la N-vinylpyrrolidone, et
e) 0,2 à 3, de préférence 0,5 à 2% en poids, d'une ou de plusieurs unités structurelles réticulantes, qui proviennent de monomères présentant au moins deux doubles liaisons oléfiniques.

20. Procédé selon l'une ou plusieurs des revendications 1 à 18, **caractérisé en ce qu'**on prépare un polymère contenant
a) 49,99 à 98,99% en poids d'une ou de plusieurs des unités structurelles répétitives de formule (1)
d) 1 à 50% en poids d'une ou de plusieurs des unités structurelles répétitives dérivées des monomères de formule (4), et
e) 0 à 8, de préférence 0,01 à 5% en poids, d'une ou de plusieurs unités structurelles réticulantes, qui proviennent de monomères présentant au moins deux doubles liaisons oléfiniques.

21. Utilisation d'un polymère, pouvant être obtenu selon un procédé selon l'une ou plusieurs des revendications 1 à 20, comme épaississant ou stabilisateur dans les agents autobronzants, contenant 0,1 à 10% en poids de dihydroxyacétone, par rapport aux agents finis, ces agents autobronzants étant de préférence réglées à un pH de 3,5 à 5,5, de manière particulièrement préférée de 4 à 5.

22. Agents autobronzants contenant un ou plusieurs polymères, pouvant être obtenus selon un procédé selon l'une ou plusieurs des revendications 1 à 20 et 0,1 à 10% en poids de dihydroxyacétone, par rapport aux agents finis, ces agents autobronzants étant de préférence réglés à un pH de 3,5 à 5,5, de manière particulièrement préférée de 4 à 5.
